# EUROPÄISCHE PATENTSCHRIFT

(11) **EP 0 600 167 B1**
(45) Veröffentlichungstag und Bekanntmachung des Hinweises auf die Patenterteilung: **28.04.1999**
(21) Anmeldenummer: 93114228.5
(22) Anmeldetag: 06.09.1993
(51) Int. Cl.: F16J 15/32

(54) **Kolben und Werkzeug zur Herstellung eines Kolbens**
Piston and tool for manufacturing a piston
Piston et outil pour fabriquer un piston

(30) Priorität: 08.10.1992 DE 4233896
(43) Veröffentlichungstag der Anmeldung: 08.06.1994
(73) Patentinhaber: ROBERT BOSCH GMBH, 70442 Stuttgart (DE)
(72) Erfinder: Siegel, Heinz, Ing. grad., D-70435 Stuttgart (DE); Merklein, Dieter Ing., D-71636 Ludwigsburg (DE); Schwind-Grellmann, Barbara, Dipl.-Ing., D-71364 Winnenden (DE); Bareiss, Alexander, Dipl.-Ing., North Charleston SC 29418 (US); Ott, Harald, Ing., D-71254 Ditzingen (DE)

(56) Entgegenhaltungen:
- FR-A- 1 597 230
- FR-A- 2 005 994
- US-A- 2 476 021
- US-A- 4 998 461
- 'seals and sealing handbook' , TRADE & TECHNICAL PRESS LTD , MORDEN GB * Seite 183; Abbildung 5 *

## Beschreibung

### Stand der Technik

Die Erfindung betrifft einen Kolben mit umlaufender Dichtung, welcher in einer zylindrischen Aufnahmebohrung eines Bauteils, beispielsweise eines Gehäuseblockes, gleitbar sitzt und zumindest einseitig mit Druck beaufschlagbar ist, sowie ein Werkzeug zur Herstellung eines derartigen Kolbens.

Derartige Kolben finden in vielfältiger Form und Ausführung Anwendung. Beispielsweise wird hier auf die WO 91/16220 verwiesen, wo in einem Gehäuseblock für ein hydraulisches Bremssystem mehrere Kolben in entsprechenden Aufnahmebohrungen gleitbar lagern und einseitig mit Druck beaufschlagbar sind, wodurch ein Gleiten dieser Kolben in der Aufnahmebohrung gegen den Druck einer Feder erfolgt.

Derartige Kolben stützen sich in der Regel über einen Dichtring gegen eine Innenwandung der Aufnahmebohrung ab, wodurch ein Druckraum von einem in der Regel nicht mit Druck beaufschlagten Raum getrennt wird. In dem letztgenannten Raum ist beispielsweise gem. der WO 91/16220 eine Feder angeordnet, welche den Kolben bei nachlassendem Druck in seine Ausgangslage zurückführt.

Für die Dichtung ist es wesentlich, daß diese auf dem Außenumfang des Kolbens gehalten und gegen Beschädigungen gesichert wird. Die Halterung kann beispielsweise durch einen Ringkanal in dem Kolben erfolgen, wodurch jedoch die Herstellung des Kolbens, beispielsweise im Spritzgießverfahren, erschwert wird. Vor allem gestaltet sich das Entformen schwierig, und es entstehen auf der eigentlichen Lauffläche des Kolbens und der Auflagefläche für die Dichtung Grate, welche eine Nacharbeit erforderlich machen. Auch ist die Dichtung nicht gegen Schmutz und Späne beispielsweise aus einem Anschlußkanal an eine Druckspeicherkammer gesichert, wodurch Beschädigungen der Dichtungen und damit Undichtheiten entstehen können.

Durch die Veröffentlichung "Seals and Sealing Handbook", Trade and Technical Press LTD, Morden, GB auf Seite 183 in Abbildung 5 ist ein die Gattung gemäß dem Oberbegriff des Anspruchs 1 bildender Kolben bekannt mit einer umlaufenden Dichtung, wobei der Kolben eine Schulter zur Aufnahme der Dichtung aufweist, welche eine Lauffläche von einem Abschnitt mit einer Mantelfläche trennt, wobei ein Durchmesser der Lauffläche größer ist als ein Durchmesser der Mantelfläche und wobei die Mantelfläche an einer Durchmesserstufe endet und in einen von der Durchmesserstufe ausgehenden zapfenartigen Ansatz eine Nut in den Kolben geformt ist, die zur Aufnahme eines ersten Ringes dient, wobei zwischen diesem Ring und der Durchmesserstufe sich ein weiterer Ring mit größerem Außendurchmesser befindet zum Sichern des Dichtringes in axialer Richtung. Der erste Ring ist ersichtlich ein sogenannter Federring, wogegen der zweite Ring nach Art einer planparallel begrenzten Ringscheibe vermutlich durch Ausstanzen aus einem Blech hergestellt ist und zu einer zugeordneten zylindrischen Aufnahmebohrung für den Kolben in radialer Richtung einen Mindestabstand haben muß. Zur Sicherung der Dichtung in axialer Richtung ist der technische Aufwand für zwei Ringe zu bezahlen. Es ist nicht ausschließbar, daß durch den radialen Mindestabstand zwischen dem zweiten Ring und der zylindrischen Aufnahmebohrung Schmutz oder Späne zur Dichtung gelangen können mit der Folge von Verschleiß an der Dichtung und gegebenenfalls auch am Kolben.

Durch das Dokument US-A-4,998,461 ist ein Kolben aus thermoplastischem Werkstoff mit einer unterteilten Lauffläche und einer Mantelfläche zur Aufnahme einer Dichtung und mit einer über die Mantelfläche schiebbaren thermoplastischen Muffe bekannt, wobei zur Sicherung der Muffe am Kolben und damit der Dichtung die Muffe thermoplastisch per Ultraschallschweißung mit dem Kolben vereinigt wird. Dabei ist durch Anordnung von radialen Durchbrüchen in der Buchse oder aber durch eine Auffangsnut, die von der Mantelfläche ausgeht, einem Abfluß von thermoplastischem Material in der Richtung, wo sich später die Dichtung befinden wird, entgegengewirkt. Erkennbar ist also die Gefahr, daß Ausschuß produzierbar ist. Als ein weiterer Nachteil kann angesehen werden, daß das Erwärmen durch Ultraschall Zeit beansprucht und demgemäß nachteilige Kosten verusacht. Zur Herstellung des Kolbens gibt die Figur 3 ein Werkzeug an für einen Kolben mit einer glatten Mantelfläche. Dieses Werkzeug zeigt die Merkmale des Oberbegriffs des Anspruchs 3, es enthält zwei Formteile, die in einer gemeinsamen Bezugsachse, die die Kolbenachse ist, ausgerichtet sind und der Herstellung von zwei beabstandeten Laufflächen, einer Schulter und der Mantelfläche dienen. Zwischen den beiden Formteilen sind radial bewegliche Schieber vorgesehen zum Erzeugen einer nutartigen Einschnürung zwischen den beiden Formwerkzeugen. Für die Herstellung einer Nut innerhalb der Mantelfläche gemäß der Figur 5 ist kein Formwerkzeug offenbart. Nachteilig bei beiden Ausführungbeispielen für Kolben ist, daß erst nach dem thermoplastischen Vereinigen der Mantelflächen der Kolben mit der jeweiligen Buchse die Dichtung über die Buchse hinweg und damit über gegebenenfalls beim thermoplastischen Vereinigen entstandene Rauhigkeiten zur Schulter am Kolben zu streifen ist, wobei auch infolge der elastischen Aufweitung der jeweiligen Dichtung Beschädigungen nicht ausschließbar sind.

Ausgehend vom Stand der Technik stellte sich die Aufgabe, die Herstellung von Kolben zu verbilligen und dabei Ursachen, die zu Ausschuß- und Fehlfunktion führen können, zu vermeiden.

### Vorteile der Erfindung

Ein Kolben der vorliegenden Art gemäß dem kennzeichnenden Teil von Anspruch 1 hat den wesentlichen Vorteil, daß der Ring, welcher die Dichtung übergreift, sowohl als Montagesicherung als auch als Abstreifring dienen kann. Letzteres wird erreicht, indem der Ring er in Gebrauchslage an einer Innenfläche der Aufnahmebohrung gleitend anliegt. Damit kann er Schmutz und Späne von der Dichtung fernhalten.

Durch die vorliegende Erfindung ist ein rotationssymetrisch abgestufter Kolben hergestellt, der in seinen Außenkonturen aus zwei Abschnitten besteht. Der erste Abschnitt ist die zylindrische Lauffläche, welche der Innenfläche der zylindrischen Aufnahmebohrung im Bauteil gleitend anliegt. Sie weist einen Durchmesser auf, welcher größer ist als ein Durchmesser des zweiten Abschnittes, wodurch eine Schulter ausgebildet ist, in welcher die oben erwähnte Dichtung sitzt. Diese Schulter bildet gleichzeitig bevorzugt eine zylindrische Mantelfläche, könnte jedoch auch geringfügig konisch ausgebildet sein. In diese Mantelfläche ist die o.g. Nut zur Aufnahme des Ringes eingeformt.

Diese erfindungsgemäßen Kolben bestehen bevorzugt aus Polyphenylensulfid (PPS), welches als Füllstoffe Glasfaser und mineralische Füllstoffe enthält, oder aus Duroplasten. Der Abstreifring sollte relativ verschleißfest sein, weshalb er aus Polypropylen oder aus Polyamid mit oder ohne Verstärkungsstoff bestehen kann.

Ein erfindungsgemäßes Werkzeug gemäß dem Anspruch 3 zur Herstellung dieses Kolbens besteht im wesentlichen aus einem Grundkörper und relativ zu diesem bewegbaren Formkörpern, durch die insbesondere die Lauffläche, die Schulter und Teile der Mantelfläche hergestellt werden. In der Regel wird sich im Innern des Grundkörpers noch ein Kern befinden, der eine gewünschte Innenkontur des Kolbens, beispielsweise ein Sackloch zur Aufnahme einer Feder, ausformt.

Zu den bewegbaren Teilen gehören zumindest zwei Schieber, welche der Herstellung des restlichen Teils der Mantelfläche mit der Nut zur Aufnahme des Ringes und zur Herstellung eines Übergangs zum Kolbenboden dienen. Die Öffnungsbewegung dieser Schieber verläuft in etwa senkrecht zu einer Kolbenachse.

Es läßt sich nicht vermeiden, daß zwischen den Schiebern und dem Formkörpern Spritzgrate entstehen. Allerdings befinden sich diese Spritzgrate nunmehr an Stellen, an denen sie keinerlei störenden Einfluß haben. Deshalb ist auch eine Nachbearbeitung des Kolbens nicht notwendig. Sie befinden sich weder auf der Lauffläche noch im Dichtflächenbereich.

Nach der Herstellung des Kolbens erfolgt das Aufbringen der Dichtung, wobei diese in der Schulter liegt. Danach kann in einfacher Art und Weise der Ring durch Einschnappen auf den Kolben aufgesetzt werden. Er verhindert ein Verrutschen der in der Regel als O-Ring ausgebildeten Dichtung und auch eine Beschädigung.

### Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Fig. 1 einen Querschnitt durch einen erfindungsgemäßen Kolben in einer Aufnahmebohrung eines Bauteils wie Gehäuseblock;
Fig. 2 einen teilweise dargestellten Querschnitt durch Formkörper zur Herstellung des erfindungsgemäßen Kolbens gem. Fig. 1.

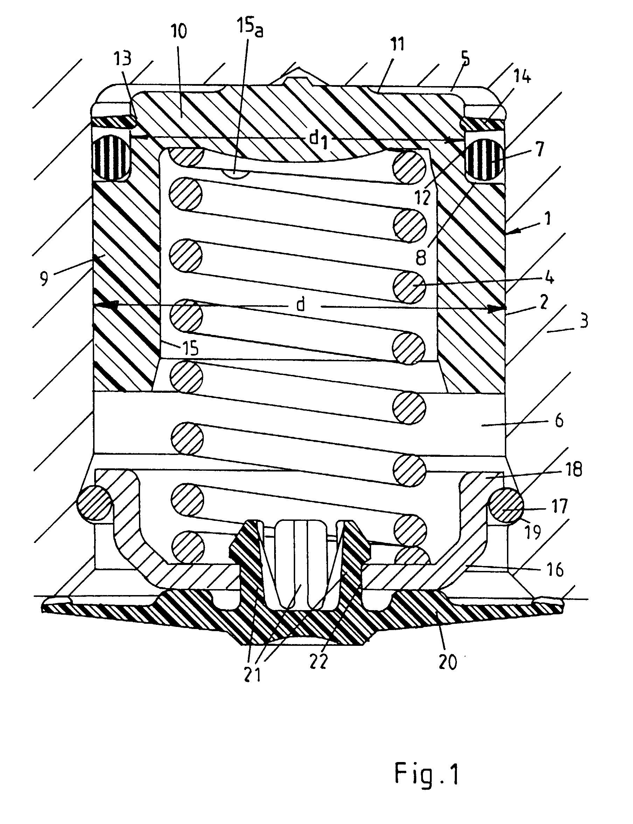

Ein erfindungsgemäßer Kolben 1 ist gemäß Fig. 1 in einer zylindrischen Aufnahmebohrung 2 eines Bauteils wie Gehäuseblockes 3 angeordnet und kann in dieser Aufnahmebohrung 2 gegen die Kraft einer vorgespannten Feder 4 gleiten, die den Kolben 1 bei nachlassendem Druck wieder in die in Fig. 1 gezeigte Ausgangslage zurückstellt.

Der Kolben 1 wird von einer Seite her mit Druck beaufschlagt, wobei ein sich vergrößernder Druckraum 5 ausgebildet wird. Dagegen verkleinert sich ein Raum 6 gegenüber dem Druckraum 5.

Zur Abdichtung von Druckraum 5 gegenüber Raum 6 ist eine Dichtung 7 vorgesehen, welche in einer Schulter 8 des Kolbens 1 sitzt. Durch die Schulter 8 ist der Kolben 1 rotationssymmetrisch gestuft ausgebildet, wobei eine zylindrischer Lauffläche 9 einen Durchmesser d aufweist, welcher in etwa dem Durchmesser der Aufnahmebohrung 2 entspricht, während nach der Schulter 8 ein zylindrischer Abschnitt 10 mit einem Durchmesser d1 folgt. Der Durchmesser d1 ist kleiner als der Durchmesser d. Auf den Durchmesser dl folgt dann ein Kolbenboden 11.

Der verjüngte zylindrische Abschnitt 10 bildet eine Mantelfläche 12, in welche über der Dichtung 7 eine Nut 13 eingeformt ist. Die Nut 13 dient der Aufnahme eines Ringes 14, welcher die Dichtung 7 gegen ein Herausfallen bzw. Verrutschen sichert. Ferner schützt dieser Ring 14 die Dichtung auch gegen Schmutz und Späne aus dem Anschlußkanal einer Speicherkammer od. dgl., welche die Dichtung beschädigen könnten. Hierdurch werden auf Beschädigungen zurückzuführende Undichtheiten vermieden.

In den Kolben 1 ist ferner ein Sackloch 15 mit beispielsweise drei in Umfangsrichtung verteilten Federzentriernasen 15a eingeformt, welches der Aufnahme der Feder 4 dient. Andererseits stützt sich die Feder 4 gegen ein Widerlager 16 ab, welches durch einen Sprengring 17 in der Aufnahmebohrung 2 des Gehäuseblockes 3 gehalten wird. Hierbei untergreift der Sprengring 17 einen Flansch 18 an dem Widerlager 16 und sitzt in einem Einstich 19 in der Aufnahmebohrung 2.

Auf das Widerlager 16 ist eine Schutzkappe 20 aus Kunststoff aufgesetzt, zu deren Befestigung Schnappzungen 21 in ein Loch 22 des Widerlagers 16 eingreifen. Diese Schutzkappe 20 deckt die Aufnahmebohrung 2 ab.

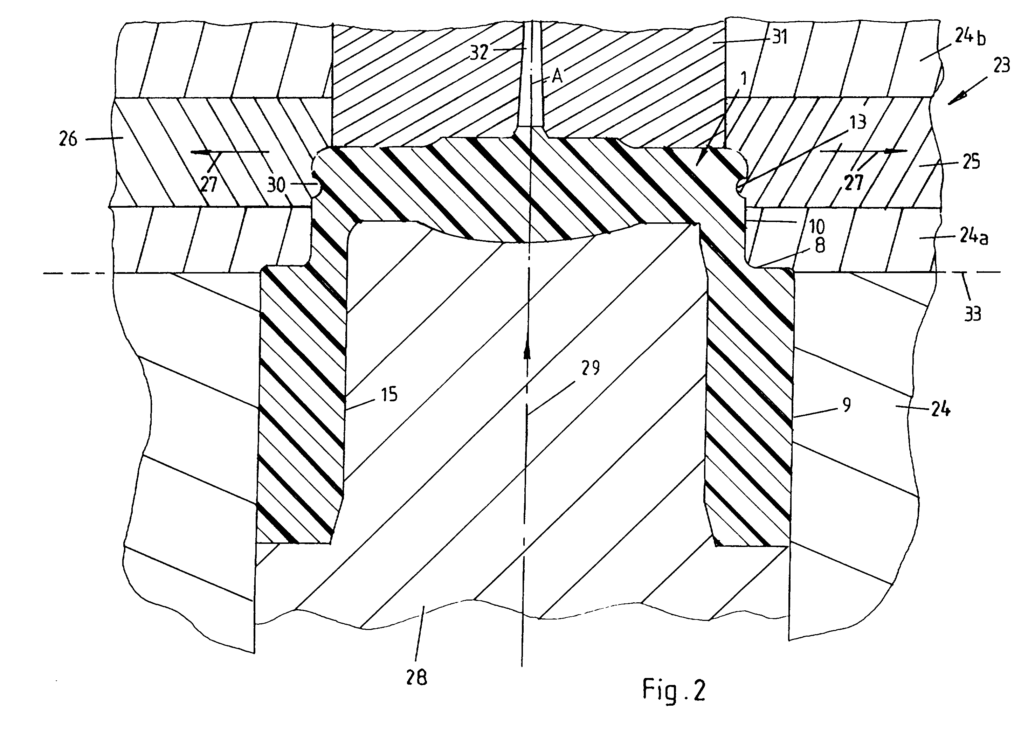

Der erfindungsgemäße Kolben 1 wird gemäß Fig. 2 in einem Werkzeug 23 durch Spritzen hergestellt. Dabei weist das Werkzeug 23 einen Grundkörper 24 und weitere Formkörper 24a, 24b, 25 und 26 auf, durch die vor allem die zylindrische Lauffläche 9 und die Schulter 8 sowie Teile des zylindrischen Abschnittes 10 hergestellt werden. Zur Herstellung insbesondere der Nut 13 und des restlichen Teils der Außenkontur des Kolbens 1 sind Schieber 25 und 26 als Formkörper vorgesehen, welche beim Öffnen des Werkzeuges 23 sich in Richtung der Pfeile 27 in jeweils einer schachtartigen Ausnehmung zwischen Formkörper 24a und 24b bewegen. Die Schieber 25 und 26 besitzen im übrigen eine wulstartige Anformung 30 zur Herstellung der Nut 13. Durch diese Anordnung ist eine Herstellung der Nut 13 möglich, wobei weder auf der zylindrischen Lauffläche 9 des Kolbens noch im Dichtflächenbereich Spritzgrate entstehen. Dementsprechend ist auch keine Nacharbeit erforderlich.

Den Formkörper 24b durchsetzt ein Spritzformteil 31 mit einem Spritzkanal 32 für den Thermoplasten. Auf das Spritzformteil 31 treffen von der Seite her die Schieber 25 und 26, so daß ein auch hier möglicherweise entstehender Grat auf dem Kolbenboden 11 sich nicht störend auswirken kann.

Das Sackloch 15 wird durch einen Kern 28 erzeugt.

Nach Herstellung des Kolbens werden die Formkörper von Grundkörper entlang einer Trennebene 33 getrennt. Der Kolben wird dann in Richtung des Pfeiles 29 aus dem Grundkörper 24 entfernt.

Sobald der Kolben 1 aus dem Werkzeug 23 entnommen ist, kann die Dichtung 7 über die Mantelfläche 12 und bis an die Schulter 8 geschoben werden. Danach erfolgt als Montagesicherung das Einsetzen des Ringes 14 in die Nut 13, wobei der Ring 14 so ausgebildet ist, daß er in die Nut 13 einschnappen und auch noch im Bereich seines äußeren Umfanges als Abstreifring wirken kann.

## Patentansprüche

1. Kolben (1) mit umlaufender Dichtung (7), welcher in einer zylindrischen Aufnahmebohrung (2) eines Bauteils (3), beispielsweise eines Gehäuseblockes, gleitbar sitzt und zumindest einseitig mit Druck beaufschlagbar ist, wobei der Kolben (1) eine Schulter (8) zur Aufnahme der Dichtung (7) aufweist, welche eine zylindrische Lauffläche (9) von einem Abschnitt (10) mit einer Mantelfläche (12) trennt, wobei ein Durchmesser (d) der Lauffläche (9) größer ist als ein Durchmesser (d1) der Mantelfläche (12) und wobei der blantelfläche (12) zugeordnet eine Nut (13) in den Kolben (1) eingeformt ist zur Aufnahme eines Ringes (14), wobei der Dichtung (7) in axialer Richtung zwischen der Schulter (8) und dem Ring (14) angeordnet und somit in axialer Richtung gesichert ist, dadurch gekennzeichnet, daß der Ring (14) in Gebrauchslage an einer Innenfläche der Aufnahmebohrung (2) gleitend anliegt.

2. Kolben nach Anspruch 1, dadurch gekennzeichnet, daß der Ring (14) aus Polypropylen oder Polyamid mit oder ohne Verstärkungsstoff besteht.

3. Werkzeug zur Herstellung eines Kolbens (1), welcher zum Gleiten in einer zylindrischen Aufnahmebohrung (2) eines Bauteils (3) bestimmt und zumindest einseitig mit Druck beaufschlagbar ist, wobei das Werkzeug (23) in einer Bezugsachse (A) ausgerichtete Formkörper (24, 24a, 24b) zum Herstellen einer Lauffläche (9), einer Schulter (8) und einer Mantelfläche (12), die einen kleineren Durchmesser als einen Durchmesser der Lauffläche (9) hat, aufweist, und wobei das Werkzeug (23) des weiteren zwei senkrecht zur Bezugsachse (A) beweglich angeordnete Schieber (25, 26) zum Herstellen einer Nut (13) im Kolben (1) aufweist, dadurch gekennzeichnet, daß die zwei Formkörper (24, 24a), wobei der eine Formkörper (24) ein Grundkörper ist, entlang einer Trennebene (33) aneinanderliegen und nach der Herstellung des Kolbens (1) voneinander trennbar sind und daß die Schieber (25, 26), welche beim Öffnen des Werkzeugs (23) in entgegengesetzte Richtungen bewegbar sind, in jeweils einer schachtartigen Ausnehmung zwischen dem zum Herstellen der Mantelfläche (12) und der Schulter (8) des Kolbens (1) eingerichteten Formkörper (24a und 24b) bewegbar sind und radial einwärts wulstartige Anformungen (30) aufweisen für die Nut (13), die vom Durchmesser der Mantelfläche (12) des Kolbens (1) ausgeht.

## Claims

1. Piston (1) which has a peripheral seal (7), is seated with sliding action in a cylindrical receiving bore (2) of a component (3), for example of a housing block, and can be subjected to pressure on at least one side, it being the case that the piston (1) has a shoulder (8) for receiving the seal (7), said shoulder separating a cylindrical running surface (9) from a section (10) with a lateral surface (12), it being the case that a diameter (d) of the running surface (9) is larger than a diameter (d1) of the lateral surface (12), and it being the case that, assigned to the lateral surface (12), a groove (13) is formed in the piston (1) in order to receive a ring (14), and it being the case that the seal (7) is arranged in the axial direction between the shoulder (8) and the ring (14), and is thus secured in the axial direction, characterized in that, in the use position, the ring (14) butts with sliding action against an inner surface of the receiving bore (2).

2. Piston according to Claim 1, characterized in that the ring (14) consists of polypropylene or polyamide with or without reinforcing material.

3. Mould for producing a piston (1) which is intended for sliding in a cylindrical receiving bore (2) of a component (3) and can be subjected to pressure on at least one side, it being the case that the mould (23) has mould parts (24, 24a, 24b) which are aligned along a reference axis (A) and are intended for producing a running surface (9), a shoulder (8) and a lateral surface (12), which has a smaller diameter than a diameter of the running surface (9), and it being the case that the mould (23) also has two slide bars (25, 26) which are arranged such that they can be moved perpendicularly with respect to the reference axis (A) and which are intended for producing a groove (13) in the piston (1), characterized in that the two mould parts (24, 24a), one mould part (24) being a basic body, butt against one another along a parting plane (33) and can be parted from one another following production of the piston (1), and in that the slide bars (25, 26), which can be moved in opposite directions when the mould (23) is opened, can be moved in a shaft-like recess in each case between the mould parts (24a and 24b), set up for producing the lateral surface (12) and the shoulder (8) of the piston (1), and have bead-like formations (30) in the radially inward direction, these formations being intended for the groove (13), which extends from the diameter of the lateral surface (12) of the piston (1).

## Revendications

1. Piston (1) avec un joint d'étanchéité (7) qui fait tout le tour et repose dans un alésage de réception cylindrique (2) d'une pièce constitutive (3), par exemple un bloc de carter, de façon à pouvoir glisser et qui peut être au moins d'un côté soumis à une pression, le piston (1) présentant un épaulement (8) servant à recevoir le joint d'étanchéité (7) qui sépare une surface de glissement (9), cylindrique, d'une section (10) pourvue d'une surface enveloppe (12); le diamètre (d) de la surface de glissement (9) étant plus grand que le diamètre (d1) de la surface enveloppe (12) et une rainure (13) associée à la surface enveloppe (12) étant formée dans le piston (1) pour recevoir une bague (14), la bague d'étanchéité (7) étant disposée dans le sens axial entre l'épaulement (8) et la bague (14) et étant fixée de cette façon dans le sens axial,
caractérisé en ce que
la bague (14) repose en position d'utilisation sur la surface intérieure de l'alésage de réception (2) en glissant.

2. Piston selon la revendication 1,
caractérisé en ce que
la bague (14) est réalisée en polypropylène ou en polyamide avec ou sans matière de renforcement.

3. Outil servant à la fabrication d'un piston (1) qui est conçu pour glisser dans un alésage cylindrique de réception (2) d'une pièce constitutive (3), et est soumis au moins d'un côté à une pression, l'outil (23) présentant des corps de forme (24, 24a, 24b), orientés selon un axe de référence (A), pour fabriquer une surface de glissement (9), un épaulement (8) et une surface enveloppe (12) qui a un plus petit diamètre que le diamètre de la surface de glissement (9), et l'outil (28) présentant en outre deux tiroirs (25 26), disposés de façon mobile perpendiculairement à l'axe de référence (A) pour fabriquer une rainure (13) dans le piston (1),
caractérisé en ce que
• les deux corps de forme (24, 24a), l'un des corps de forme, le corps (24), étant un corps de base, pouvant se trouver côte à côte le long d'un plan de joint (33) et après la fabrication du piston (1) être séparés l'un de l'autre et
• les tiroirs (25, 26) qui peuvent se déplacer lors de l'ouverture de l'outil (23) dans des directions opposées, peuvent se déplacer dans respectivement un évidement en forme de puits compris entre le corps de forme (24a et 24b) installé pour fabriquer la surface enveloppe (12) et l'épaulement (8) du piston (1) et présentent des déformations (30) en forme de bourrelets, dirigées radialement vers l'intérieur pour la rainure (13) qui part de la circonférence de la surface enveloppe (12) du piston (1).
